# EUROPEAN PATENT APPLICATION

(11) **EP 1 801 461 A2**
(43) Date of publication of application: **27.06.2007**
(21) Application number: 06026148.4
(22) Date of filing: 18.12.2006
(51) Int. Cl.: F16H 57/04

(54) **Lubricating structure for transmission**

(30) Priority: 20.12.2005 JP 2005366815
(71) Applicant: AISIN AI Co., Ltd., Nishio-shi, Aichi-ken (JP)
(72) Inventor: Suzuki, Hiroyuki c/o Aisin AI Co., Ltd., Nishio-shi, Aichi-ken (JP); Suzuki, Yasuhisa c/o Aisin AI Co., Ltd., Nishio-shi, Aichi-ken (JP)
(74) Representative: Marshall, John Grahame

(57) **Abstract**

A lubricating structure for a transmission apparatus includes a parallel axes type transmission provided in a vehicle, a transmission case (11) for housing the transmission and storing a lubricating oil at a bottom portion, an oil receiver (18) having a receiver portion (18a) provided at a first side of an axial direction of the transmission and collecting the lifted lubricating oil, a supply opening (18b) provided at a second side of the axial direction of the transmission for supplying the collected oil to the transmission, and a fluid passage (18c) extended along the axial direction of the transmission for connecting the receiver portion (18a) and the supply opening (18b), and a first rib (20) formed at an inner wall of the transmission case and extending toward a lower portion or a lower side of the first predetermined gear from the vicinity of the supply opening (18b).

## Description

### FIELD OF THE INVENTION

The present invention relates to a lubricating structure for a transmission. More particularly, the present invention pertains to a lubricating structure for a manual transmission having an oil receiver collecting lubricating oil.

### BACKGROUND

Recently, a request has increased for vehicle fuel efficiency improvement and manual transmission transfer loss reduction. It is known that the lubricating oil loss greatly influences the manual transmission transfer loss. However, lubricating oil reduction causes a deterioration of lubricating ability.

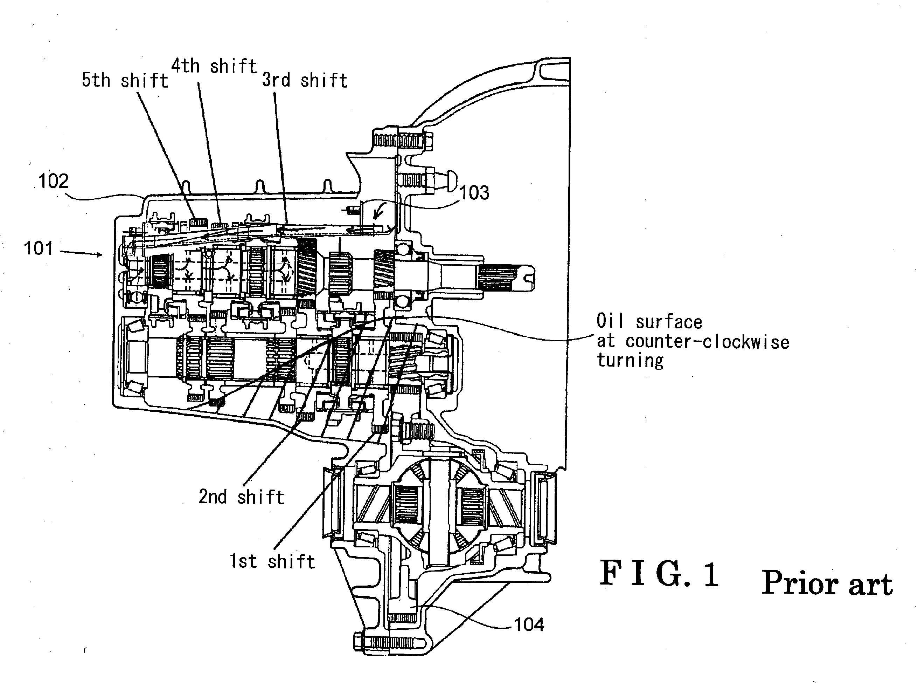

Illustrated in Fig.1 is a conventional lubricating structure for a transmission provided in an automobile.

With reference to Fig. 1, a transmission 101 is a parallel synchromesh-type transmission. The transmission 101 includes first through fifth forward gear trains and plural synchromesh mechanisms that fix the first through fifth forward gear trains to shafts. The lubricating oil (shaded area in Fig. 1) is stored at a lower side of the transmission 101, i.e., a bottom portion of a transmission case 102, so that the gears can lift up the lubricating oil. An oil receiver 103 extending in an axial direction of the transmission is provided at an upper side of the transmission 101.

When the vehicle is turned left (when the vehicle is turned to a left side in Fig. 1), the lubricating oil moves to a right side of the vehicle (to a side of a ring gear 104 in Fig. 1) as indicated by a diagonal stroke in Fig. 1 due to centrifugal force. Therefore, a surface of the lubricating oil at the left side of the vehicle is lowered and an amount of the lubricating oil supplied to a surface of a gear positioned at the left side (turning side) is lowered. In consequence, a gear surface overheating, or the like, may occur. In order to return the lubricating oil from the right side to the left side of the vehicle during a counter-clockwise turning of the vehicle, the oil receiver 103 collects the lubricating oil lifted by means of the gears rotating with an operation of the transmission and supplies the lubricating oil from an upper side of a gear positioned at the left side of the vehicle (fifth gear side) for lubricating the surface of the gears.

However, according to the conventional lubricating structure for the transmission, the lubricating oil from the oil receiver is directly supplied to the surface of the gear, which is rapidly rotating. On this occasion, because the lubricating oil may be scatter due to the rapidly rotating gear, an increased amount of the lubricating oil may be required. Further, when the increased amount of the lubricating oil is required from the oil receiver, the reduction of the lubricating oil may become difficult.

A need thus exists to provide a lubricating structure for a transmission which reduces a lubricating loss while ensuring a lubricating ability of the transmission.

### SUMMARY OF THE INVENTION

According to an aspect of the present invention, a lubricating structure for a transmission apparatus includes a parallel axes type transmission provided in a vehicle, a transmission case for housing the transmission and storing a lubricating oil at a bottom portion, the lubricating oil being lifted in accordance with an operation of the transmission for lubricating the transmission, a surface level of the lubricating oil stored at the bottom portion of the transmission case being varied upon turning of the vehicle, an oil receiver having a receiver portion provided at a first side of an axial direction of the transmission and collecting the lifted lubricating oil, a supply opening provided at a second side of the axial direction of the transmission for supplying the collected oil to the transmission, and a fluid passage extended along the axial direction of the transmission for connecting the receiver portion and the supply opening and being inclined from the receiver portion to the supply opening by a predetermined angle with respect to the axial direction so that the lubricating oil is supplied sufficiently to a first predetermined gear positioned at the second side of the transmission against a centrifugal force generated upon the turning of the vehicle to the second side of the vehicle, and a first rib formed at an inner wall of the transmission case and extending toward a lower portion or a lower side of the first predetermined gear from the vicinity of the supply opening, the first rib forming a space with a side surface of the first predetermined gear for supplying the lubricating oil dropped from the supply opening to the first predetermined gear from the lower portion or the lower side thereof.

According to the present invention, a gear at a turning side, to which the lubricating oil may hardly be supplied upon turning of the vehicle, can sufficiently be lubricated. Therefore, an amount of the lubricating oil stored at the lower side of the transmission and lifted in accordance with the operation of the transmission can be reduced. Further, a lubricating loss, i.e., a transfer loss of the power can be reduced.

### BRIEF DESCRIPTION OF THE DRAWINGS

The foregoing and additional features and characteristics of the present invention will become more apparent from the following detailed description considered with reference to the accompanying drawings, wherein:

Fig. 1 is a view for explaining a lubricating structure of a transmission provided in an automobile according to a related art;

Fig. 2 is a sectional schematic view of a lubricating structure for a transmission according to an embodiment of the present invention viewed from a left side of a vehicle;

Fig. 3 is a sectional view taken along line III-III of Fig. 2;

Fig. 4 is a sectional view taken along line IV-IV of Fig. 2;

Fig. 5 is a sectional view taken along line V-V of Fig. 4; and

Fig. 6 is a sectional view taken along line VI-VI of Fig. 4.

### DETAILED DESCRIPTION

An embodiment of the present invention will be explained with reference to the attached drawings.

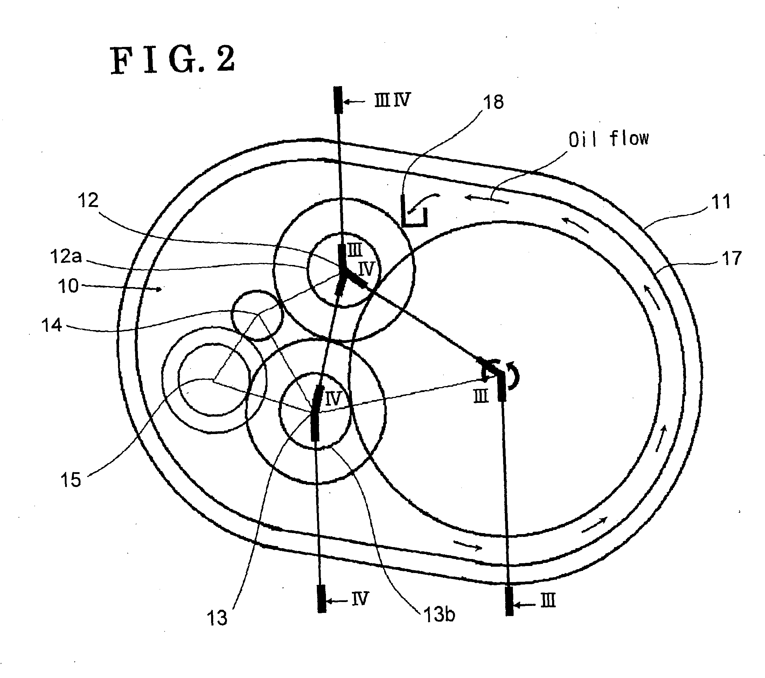

With reference to Fig. 2, a transmission mechanism includes a parallel synchromesh-type transmission 10 (manual transmission, multi-axis gear train) provided in a vehicle and a transmission case 11 housing the transmission 10. Lubricating oil is stored at a bottom portion of the transmission case 11 and is lifted in accordance with an operation of the transmission 10. The transmission 10 is lubricated by the lifted lubricating oil and a level of a surface of the lubricating oil stored in the bottom portion of the transmission case 11 varies when turning the vehicle.

The transmission 10 is horizontally provided in the vehicle. The transmission 10 includes first through fourth shafts 12-15, to which first through fourth gear trains are arranged, and a ring gear 17 meshing with output gears 12a and 13b of the first and second shafts 12 and 13 for transmitting a power to a differential mechanism 16. The ring gear 17 can lift the lubricating oil stored at the bottom portion of the transmission case 11.

An oil receiver 18 is provided at an upper side of the ring gear 17 so that the oil receiver 18 can collect the lubricating oil lifted by the ring gear 17, or the like.

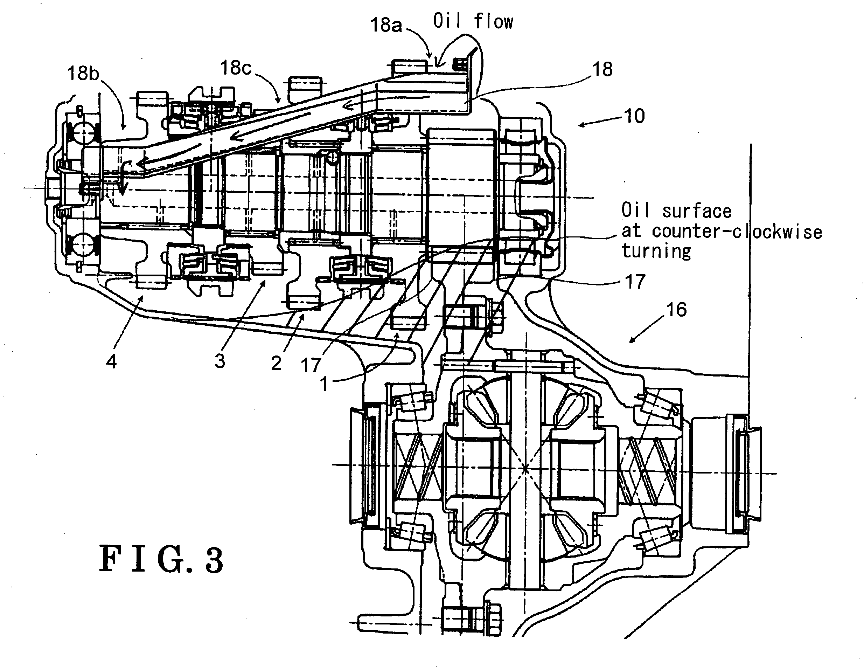

With reference to Fig. 3, the oil receiver 18 includes a receiver portion 18a, a supply opening 18b, and a fluid passage 18c. The receiver portion 18a is provided at a right side (i.e., a first side) along an axial direction of the transmission 10 and receives the lubricating oil lifted by the ring gear 17, or the like. The supply opening 18b is provided at a left side (i.e., a second side) along the axial direction of the transmission 10. The fluid passage 18c connects the receiver portion 18a and the supply opening 18b.

The oil receiver 18 is extended in the axial direction of the transmission 10 in such a manner that the oil receiver 18 is inclined from the receiver portion 18a to the supply opening 18b by a predetermined angle so that the lubricating oil can sufficiently be supplied to a first predetermined gear 19a (a first predetermined gear train 19 configured of gears 19a and 19b) positioned at the left side of the vehicle against the centrifugal force generated when the vehicle turns left. According to the embodiment of the present invention, the first predetermined gear 19a (the first predetermined gear train 19) is positioned at a leftmost side in the transmission 10. The first predetermined gear 19 may be a higher shift stage.

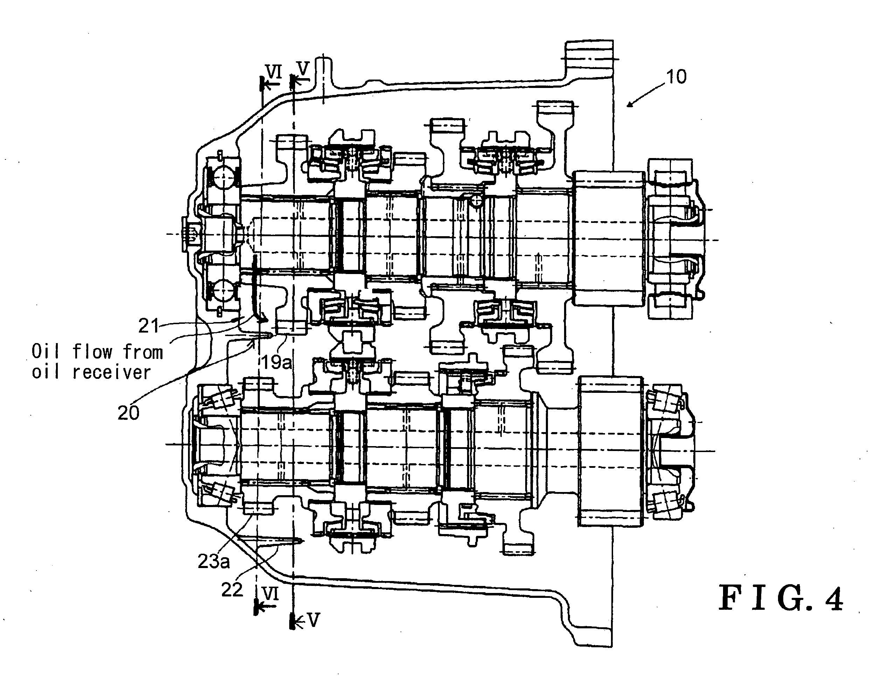

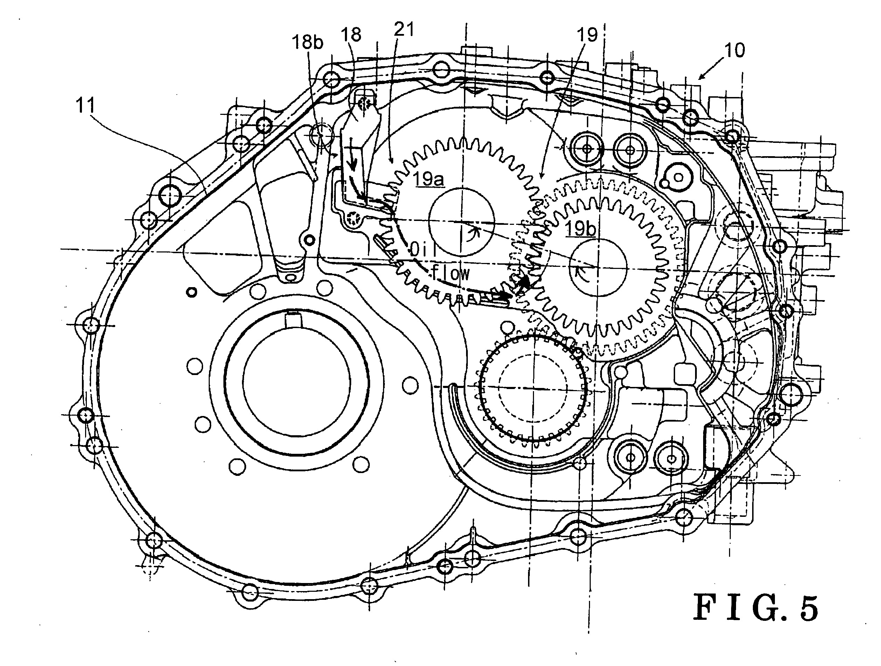

With reference to Figs. 4 and 5, a first rib 20 is formed on an inner surface of the transmission case 11 in the vicinity of the supply opening 18b and extended toward a lower portion and a lower side of the first predetermined gear 19a. The first rib 20 and a side surface of the first predetermined gear 19a form a space 21 into which the lubricating oil from the supply opening 18b is supplied. The lubricating oil in the space 21 is supplied to the first predetermined gear 19a (the first predetermined gear train 19) from the lower portion and the lower side thereof.

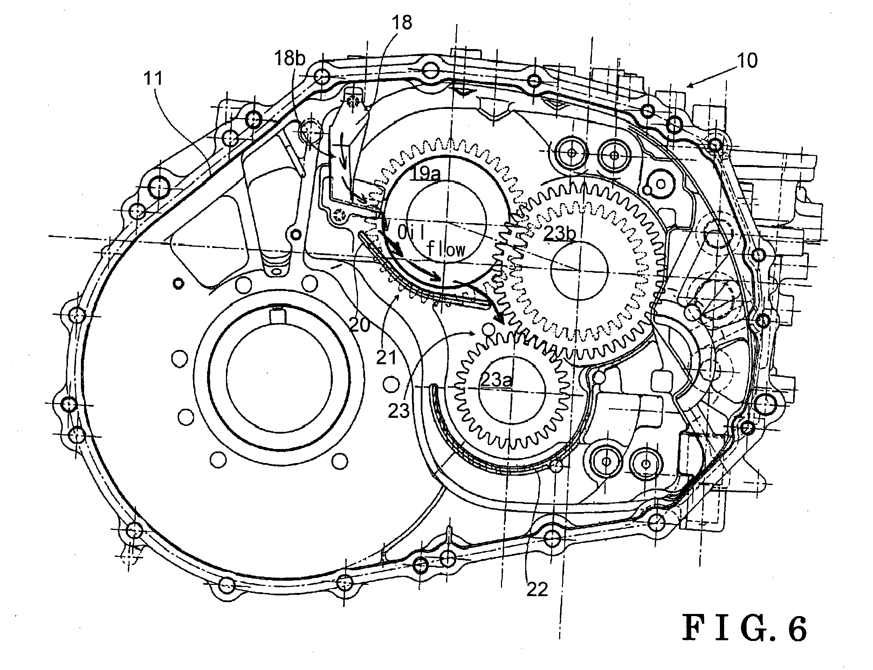

With reference to Figs. 4 and 6, a second rib 22 is arranged in such a manner that the second rib 22 encloses second predetermined gears 23a and 23b (a second predetermined gear trains 23 configured of the gears 23a and 23b) positioned at the lower side of the first predetermined gear 19a. The second rib 22 receives the lubricating oil flowed from the space 21 and supplies the lubricating oil to the second predetermined gears 23a and 23b from a lower portion and a lower side thereof.

Flow of the lubricating oil in the lubricating structure for the transmission according to the embodiment of the present invention when turning the vehicle counter-clockwise will be explained hereinafter.

When the vehicle turns left, the lubricating oil stored at the lower side of the transmission 10 is moved to a right side (i.e., the first side) of the transmission 10 (a side of the ring gear 17), because of the centrifugal force, and an amount of the lubricating oil lifted by the gears positioned at a left side (i.e., the second side) of the transmission 10 decreases. The lubricating oil lifted by the ring gear 17, or the like, positioned at the right side of the transmission 10 is collected at the receiver portion 18a of the oil receiver 18 and is supplied to the space 21 formed by the first rib 20 through the fluid passage 18c. In the space 21, the lubricating oil above the first rib 20 is lifted by the first predetermined gear 19a or directly supplied to a meshing point of the gear 19a and the gear 19b. Therefore, an amount of the lubricating oil scattered because of a rotation of the first predetermined gear 19a can be reduced.

Further, the lubricating oil flows to the second rib 22 from the space 21. The lubricating oil above the second rib 22 is lifted by the second predetermined gears 23a and 23b or directly supplied to a meshing point of the gear 23a and the gear 23b. Therefore, an amount of the lubricating oil scattered because of a rotation of the second predetermined gears 23a and 23b can be reduced.

With the configuration of the lubricating structure according to the embodiment of the present invention, because of the oil receiver 18 and the first rib 20, an increased amount of the lubricating oil can be supplied to the first predetermined gear 19a (the first predetermined gear train 19) positioned at a left end of the transmission 10, the first predetermined gear 19a being hardly supplied with the lubricating oil when turning the vehicle counter-clockwise. Further, because of the second rib 22, an increased amount of the lubricating oil can be supplied to the second predetermined gears 23a and 23b (the second predetermined gear train 23) positioned at the left side of the transmission 10 (the turning side of the vehicle). Therefore, the amount of the lubricating oil stored at the bottom portion of the transmission case 11 can be reduced and a lubricating resistance in the transmission 10 can thereby be reduced.

The lubricating structure according to the present invention can be applied to any apparatus, the surface of the lubricating oil therein is fluctuated. According to the embodiment of the present invention, the lubricating structure is applied to the transmission provided in the vehicle.

According to the embodiment of the present invention, the lubricating structure includes a second rib arranged in such a manner to enclose the second predetermined gear provided at the lower side of the first predetermined gear. The second rib receives the lubricating oil flowed from the space and supplies the lubricating oil to the second predetermined gear. Therefore, a lubricating ability of the second predetermined gear, placed at a position in which a supply amount of the lubricating oil may be lowered when turning the vehicle, can be ensured.

According to the embodiment of the present invention, the first predetermined gear is positioned at an outer most area of the second side of the transmission. According to the embodiment of the present invention, the lubricating ability of the gear positioned at a second end of the transmission, to which the lubricating oil may hardly be supplied when the vehicle is turned to the second side, can be ensured.

According to the embodiment of the present invention, the lubricating structure is applied to the parallel synchromesh-type manual transmission which is horizontally provided in the vehicle.

According to the embodiment of the present invention, the first predetermined gear positioned at the second side is a gear placed at a position in which a lubricating deficit may occur because of a fluctuation of the surface of the lubricating oil lifted by the transmission. For example, the first predetermined gear is positioned at the outermost area of the second side, i.e., at an outermost area of the turning side.

Conventionally, when turning the vehicle, the lubricating ability of the gear positioned at the turning side (the predetermined gear positioned at the second side of the transmission) is lowered because the surface of the lubricating oil stored at the lower side of the transmission is inclined or lowered and the amount of the lubricating oil lifted in accordance with the operation of the transmission is lowered because of the centrifugal force. According to the embodiment of the present invention, because of the oil receiver having an angle which overcomes the centrifugal force generated when turning the vehicle, the lubricating oil can sufficiently be supplied to the gear positioned at the turning side of the vehicle.

According to the embodiment of the present invention, the lubricating oil flowed from the oil receiver is received at the space, formed by the first rib and the gear at the turning side (the predetermined gear positioned at the second side of the transmission), and is supplied to the gear at the turning side from the lower portion and the lower side thereof or is supplied directly to the meshing point of the gears at the turning side. Therefore, the lubricating oil supplied from the oil receiver may not scattered because of the rotation of the gear and the gear at the turning side can sufficiently be lubricated with a small amount of the lubricating oil.

According to the embodiment of the present invention, the gear at the turning side, to which the lubricating oil may hardly be supplied upon turning of the vehicle, can sufficiently be lubricated. Therefore, the amount of the lubricating oil stored at the lower side of the transmission and lifted in accordance with the operation of the transmission can be reduced. Further, the lubricating loss, i.e., a transfer loss of the power can be reduced.

## Claims

1. A lubricating structure for a transmission apparatus, comprising:
a parallel axes type transmission provided in a vehicle; and
a transmission case (11) for housing the transmission and storing a lubricating oil at a bottom portion, the lubricating oil being lifted in accordance with an operation of the transmission for lubricating the transmission, a surface level of the lubricating oil stored at the bottom portion of the transmission case being varied upon turning of the vehicle,
**characterized in comprising:**
an oil receiver (18) having: a receiver portion (18a) provided at a first side of an axial direction of the transmission and collecting the lifted lubricating oil; a supply opening (18b) provided at a second side of the axial direction of the transmission for supplying the collected oil to the transmission; and a fluid passage (18c) extended along the axial direction of the transmission for connecting the receiver portion (18a) and the supply opening (18b) and being inclined from the receiver portion (18a) to the supply opening (18b) by a predetermined angle with respect to the axial direction so that the lubricating oil is supplied sufficiently to a first predetermined gear (19) positioned at the second side of the transmission against a centrifugal force generated upon the turning of the vehicle to the second side of the vehicle; and
a first rib (20) formed at an inner wall of the transmission case and extending toward a lower portion or a lower side of the first predetermined gear from the vicinity of the supply opening (18b), the first rib (20) forming a space (21) with a side surface of the first predetermined gear (19) for supplying the lubricating oil dropped from the supply opening (18b) to the first predetermined gear from the lower portion or the lower side thereof.

2. The lubricating structure for a transmission apparatus according to claim 1, further comprising a second rib (22) arranged in such a manner so as to enclose a second predetermined gear (23) provided at a lower side of the first predetermined gear (19), the second rib (22) receiving the lubricating oil flowing from the space (21) and supplying the lubricating oil to the second predetermined gear.

3. The lubricating structure for a transmission apparatus according to claim 1 or 2, wherein the first predetermined gear is placed at an outermost area of the second side of the transmission.

4. The lubricating structure for a transmission apparatus according to any one of claims 1-3, wherein the transmission includes a manual transmission.

5. The lubricating structure for a transmission apparatus according to any one of claims 1-4, wherein the first predetermined gear is a higher shift stage gear.
